# EUROPEAN PATENT SPECIFICATION

(11) **EP 3 229 164 B1**
(45) Date of publication and mention of the grant of the patent: **25.03.2020**
(21) Application number: 16164280.6
(22) Date of filing: 07.04.2016
(51) Int. Cl.: G06F 21/57

(54) **DEVICES FOR MEASURING AND VERIFYING SYSTEM STATES**
VORRICHTUNGEN ZUR MESSUNG UND ÜBERPRÜFUNG VON SYSTEMZUSTÄNDEN
DISPOSITIFS PERMETTANT DE MESURER ET DE VÉRIFIER DES ÉTATS DE SYSTÈME

(43) Date of publication of application: 11.10.2017
(73) Proprietor: Huawei Technologies Co., Ltd., Longgang District Shenzhen, Guangdong 518129 (CN)
(72) Inventor: Rein, Andre, 80992 Munich (DE); Lauer, Hagen, 80992 Munich (DE)
(74) Representative: Kreuz, Georg Maria

(56) References cited:
- US-A1- 2003 055 552
- US-A1- 2008 046 752
- US-A1- 2012 324 236
- MARK SHANECK ET AL: "Remote Software-Based Attestation for Wireless Sensors", 1 January 2005 (2005-01-01), SECURITY AND PRIVACY IN AD-HOC AND SENSOR NETWORKS LECTURE NOTES IN COMPUTER SCIENCE;;LNCS, SPRINGER, BERLIN, DE, PAGE(S) 27 - 41, XP019026274, ISBN: 978-3-540-30912-3 * paragraph [04.1] - paragraph [04.2] *

## Description

### TECHNICAL FIELD

The present invention relates to a device for measuring system states, a device for verifying system states, and to a corresponding system and methods. In particular, the invention has the purpose of performing Dynamic Runtime Integrity Verification and Evaluation (DRIVE) of system states.

### BACKGROUND

Trusted Computing (TC) Technologies were introduced by the Trusted Computing Group (TCG) in the early 2000's, but still its potential is not fully used, especially not in the technical fields of software integrity, software manipulation, and hacking in general. One of the many applications of TC Technologies is hardware-enabled monitoring and reporting of systems states, which is conventionally introduced by an Integrity Measurement Architecture (IMA). IMA itself is often an enhancement to a Linux kernel, and may be implemented as a kernel module.

The main purpose of IMA is to measure defined files, i.e. executable, libraries, kernel modules, configuration files, etc., compile all measured files in a list, i.e. a Stored Measurement Log (SML), and finally report those measurements to a Trusted Platform Module (TPM). Technically, each file needs to be loaded into a system memory, before it can be accessed or executed. IMA, when enabled, is thus an extension to the loading process of a system, measures the designated file(s), and returns control back to the usual loading process.

The IMA concept follows a simple mantra: first measure, then execute. The accumulated information from IMA can be further used during a remote attestation, for instance, with a trusted third party (TTP) reporting the platform state based on the IMA measurements. Although the above-described static on-load measurement is well researched, and is also effective in shrinking attack vectors used by e.g. viruses, worms, Trojan horses, and other malicious adversaries, it is unfortunately incapable of detecting modifications in the system memory applied after the initial loading process.

This is a disadvantage especially in infrastructure use cases, where availability is a key requirement for devices. Consequently, those devices are hardly ever restarted, and services running on the devices are often started only once after the system boot, and are terminated/restarted only due to errors or a device shutdown. Additionally, often sophisticated mechanisms are in place, which update software during their runtime, e.g. carry out live/hot patching, and thereby avoid restarts even in the case of errors. As a result, although a file, such as a services code, might reside in the system memory for months, and may undergo both intentional and unintentional changes, it is measured only once at the loading process. This leaves a rewarding attack vector.

In the prior art, some mechanisms for performing measurement and verification of certain system memory parts exist. However, there exists no solution that utilizes TC technologies and concepts, in order to verify system states in a secure and comprehensive way.

For instance, in the conventional approach of a remote attestation protocol, the protocol itself is stateless, and relies on the exchange of TPM specific data, i.e. AIK, TPM Quote, and Integrity Measurements (SML), which form the system state report. This IMA approach targets complete files, which are mapped to the memory just before the systems' loading procedure. Thus, the approach does not cover changes the loader does during segmentation and the further loading processes. This means, the reported system state only considers information prior to the loading process, but does not cover any kind of runtime information. Once a sophisticated attacker modifies the runtime information of the process, IMA cannot be used to detect those modifications.

Another known approach targets an OS kernel, but does not cover any information from userland processes. This means that this approach is only able to provide measurement and verification of kernel components, which usually do not change during system runtime. Moreover, verification in this approach is based on "known-good" hashes, but the generation of "known-good" hashes presents a significant technical problem.

Another known approach uses a mechanism, which compares certain segments in a memory and their corresponding file counterparts. However, this approach only considers .text segments, which are assumed to be not modified during their load time. While this assumption is true for so called Position Independent Code/Libraries (PIC) and Executables (PIE), the approach does not specifically consider targets in the user-space. This unfortunately renders the approach not applicable or relevant for a practical solution.

### SUMMARY

In view of the above-mentioned problems and disadvantages, the present invention aims to improve the conventional approach. The present invention has the main object to provide devices and methods for measuring, reporting and verifying runtime information of system states, respectively. For instance, of operating system components, such as the Kernel, Kernel Modules, Shared Libraries and Executables. The present invention thereby wants to close the gap between load-time integrity measurements and runtime integrity measurements. In particular, a secure way to measure runtime information and to enable its verification based on well-known references is desired. Furthermore, the present invention intends linking runtime measurements to conventional IMA values, in order to create an improved chain of trust. Optionally, the chain of trust extends from the boot process to the runtime protection of individual programs. Furthermore, the runtime measurements of the present invention should be integrated into existing TC infrastructure and their concepts.

The object of the present invention is achieved by the solutions provided in the enclosed independent claims. Advantageous implementations of the present invention are further defined in the dependent claims.

The proposed solutions extends static (load-time) system integrity measurement, reporting, and attestation processes, by observing runtime process images of system memory areas. In particular, meta-data and content of the memory areas can be monitored to ascertain, whether the system state was influenced intentionally or unintentionally throughout a processes runtime. In addition to that, the proposed solutions provide a concept for anchoring the runtime measurements in a security module, aligning the runtime measurements to their IMA dependents, and enhancing attestation protocols, in order to include and consider the obtained runtime measurements. The present invention provides a systematic approach on how measured and reported values can be analyzed and verified during remote attestation, particularly on a basis of well-known reference values or context dependent on the fly reference evaluation.

A first aspect of the present invention provides a device for measuring system states, wherein the device is configured to map sections of an executable file being executed into separate segments in a system memory; and segment every library used and load the segmented libraries and corresponding permissions into the system memory; obtain a plurality of measurements of all areas of a system memory during runtime of the system; maintain each measurement individually in a measurement log; generate and anchor a fingerprint of the measurement log in a security module, and generate and send a system state report including the anchored fingerprint and the measurement log.

An area of the system memory may, for example, be a memory segment, a part of a memory segment or multiple memory segments.

The device of the first aspect provides a secure way of performing runtime measurements, and reporting of the measurement results for verification. The measurements may be executed on particular devices to be observed. For instance, content and meta-data of different memory segments, setup during the loading process of the component and possibly modified during its runtime, may be measured.

The measurement log, in which the measurements are maintained, is, for example, a Dynamic Measurement Log (DML), which encapsulates all measured information. Cryptographic hash functions may be used to protect the integrity of the measurement log and all encapsulated measured data/structures.

In order to provide the integrity of the measurement log, the utilized security module may be a TPM, which securely stores at least one fingerprint in a tamper proof storage. Once a measurement is anchored in the security module, any illicit changes made to the log can be detected, as long as the security module guarantees that such once anchored values cannot be tampered (which is usually the case in the field, in which security modules are certified and guarantee tamper-proof memories).

The measurements, which are provided in the measurement log, can be reported with the system state report to a different system component. This component may be in the same device or may be in an external system. Reported values are at a minimum the measurement log and the security module anchored fingerprint of the log.

The device of the first aspect is able to extend static system state integrity measurements (i.e. integrity measurements taken at load time) and reporting. The runtime integrity measurements performed by the device allow detecting illicit changes made to the measurement log and to the measured system memory areas, respectively. In contrast to the conventional approach, which performs system memory measurements only once after loading, and before execution of a process or a system (e.g. OS) component, the device of the first aspect is able to perform individual measurements on each memory area individually during runtime of a process or system (OS) component after its execution. An OS component is e.g. the Kernel or Kernel Modules.

Modifications in the system memory image do not necessarily cause modifications of the file. In other words, conventional approaches performing system memory measurements may not detect modifications of the memory image, if this modification does not cause a modification of the file. In contrast thereto, by measuring the state of individual memory areas with the device of the first aspect, it is possible to detect changes in the memory image, therefore the present invention dramatically enhances the security of the system.

In a first implementation form of the device according to the first aspect, the device is configured to obtain the measurements of the system memory areas by generating a hash digest over a content of each memory area.

By means of this first measurement scheme, the obtained measurements can be processed the fastest on a verification side. That is, the scheme provides for an efficient and fast verification of the measurements. Furthermore, the scheme provides the best scalability. Another advantage is that no information about what was changed in the system memory is lost with this thorough measurement scheme.

The use of hash digests for obtaining measurements significantly reduces a size of the measured data in a very secure manner. Furthermore, the measured content can be identified later, e.g. on a verification side, without the necessity to report the complete content. Optionally, the measurement utilizes cryptographic hash functions, which enables the invention to reduce the arbitrary size of measured data down to fixed size fingerprints in a secure manner.

In a second implementation form of the device according to the first aspect as such of according to the first implementation form of the first aspect, the device is configured to obtain the measurements of the system memory areas by generating a hash digest over a content and meta-data of each memory area.

Thereby, additional characteristics and information are provided for verification. Another advantage is that in cases, in which hash values of contents for certain memory areas cannot be reproduced, due to e.g. the dynamic behavior of the content, at least the measured meta-data provides information that can be verified.

In a third implementation form of the device according to the first aspect, the device is configured to obtain the measurements of the system memory areas by generating a hash digest over a content of each memory area, identify among the measured memory areas one or more groups, and generate a hash digest for the one or more identified groups of memory areas, wherein the hash digest of each identified group is calculated over the individual hash digests of the memory areas of the group.

This second measurement scheme provides an advantageous trade-off between speed on the measurement side and the verification side, respectively. Furthermore, with this scheme, the measurement log size can be decreased by 20 Bytes (for SHA-1) and 32 Bytes (for SHA-256) for each memory area.

In a fourth implementation form of the device according to the first aspect, the device is configured to obtain the measurements of the system memory areas by generating a hash digest over a content of each memory area, identify among the measured memory areas one or more groups, and generate a hash digest for the one or more identified groups of memory areas, wherein the hash digest of each identified group is calculated over the individual byte values of the memory areas of the group.

This third measurement scheme is the fastest on the measurement side, i.e. the computation of the hash digests can be done fast. Furthermore, the measurement log size can be decreased by 20 Bytes (for SHA-1) and 32 Bytes (for SHA-256) for each entry.

In a fifth implementation form of the device according to the first aspect as such or according to any previous implementation form of the first aspect, the device is further configured to obtain a plurality of additional measurements of the system memory during a loading process of the system; maintain each additional measurement individually in a static log; generate and anchor a fingerprint of the static log in a security module, and include the static log and its anchored fingerprint into the system state report.

According to this implementation form, the (dynamic) runtime integrity measurements can be complemented with conventional (static) IMA, in order to further improve security and reliability of verification.

A second aspect of the present invention provides a device for verifying system states, wherein the device is configured to receive a system state report including a measurement log, which contains a plurality of measurements of all areas of a system memory, and a fingerprint of the measurement log generated by a security module, wherein the plurality of measurements includes measurements of (a) sections of an executable file mapped into separate segments in the system memory; and (b) segmented libraries and corresponding permissions into the system memory; verify authenticity of the fingerprint based on a cryptographic key that identifies the security module; verify integrity of the measurement log based on the verified fingerprint, if the fingerprint is authentic; verify a reliability of each measurement in the measurement log based on a comparison of the measurement with a reference value, if the measurement log is of integrity, and determine that a system state is unaltered, if each measurements is verified as reliable.

The device can verify the integrity of the received data. This may be done by application of cryptographic hash functions on the measurement log data, and later by comparison against a reported value anchored in the security module. In order to verify the individual measurements, optionally a reference database is maintained.

The device of the second aspect enables verification of runtime measurements, and thus extends conventional verification of static system integrity measurements. Accordingly, a gap-less verification chain throughout the whole lifetime of e.g. a process can be provided. The device allows for a fast verification of measurements, since only simple comparisons with reference values are required. Furthermore, the device allows verification that the measurements, for instance, obtained from a device of the first aspect, were originated at the desired device or system.

In a first implementation form of the device according to the second aspect, the device is configured to load a trusted object code system file, extract from the object code system file at least one portion related to memory area content, and simulate its loading process, in order to generate a reference value for a measurement, and judge the measurement reliable, if the generated reference value is equal to the measurement.

The object code system file may be an executable system file, particularly an Executable and Linkable Format (ELF) file, or may alternatively be a library. Such a generation of the reference value provides an efficient and reliable implementation for relocatable code. Reference values generated from a trusted ELF-Files can be built in a secure and trusted external environment.

In a second implementation form of the device according to the second aspect as such or according to the first implementation form of the first aspect, the device is configured to precompute and store a reference value for each measurement, and judge a measurement reliable, if the precomputed and stored reference value is equal to the measurement.

The precomputation of the reference value is only possible for PIC/PIE, but significantly increases the verification speed.

In a third implementation form of the device according to the second aspect as such or according to any previous implementation form of the first aspect, the device is configured to generate a hash digest of the measurement log in the system state report, and compare the generated hash digest with the verified fingerprint, in order to determine the integrity of the measurement log.

This ensures that the measurement log was not modified during its transportation from e.g. a device of the first aspect to the device of the second aspect.

A third aspect of the present invention provides a devices system for measuring and verifying system states, the device system comprising a device according to the first aspect as such or according to any implementation form of the first aspect, and a device according to the second aspect as such or according to any implementation form of the second aspect.

The system achieves the advantages described above for the device of the first aspect and the second aspect, respectively.

A fourth aspect of the present invention provides a method of measuring system states, wherein the method comprises the steps of mapping sections of an executable file being executed into separate segments in a system memory; segmenting every library used and loading the segmented libraries and corresponding permissions into the system memory; obtaining a plurality of measurements of all areas of a system memory during runtime of the system; maintaining each measurement individually in a measurement log; generating and anchoring a fingerprint of the measurement log in a security module, and generating and sending a system state report including the anchored fingerprint and the measurement log.

In a first implementation form of the method according to the fourth aspect, the method obtains the measurements of the system memory areas by generating a hash digest over a content of each memory area.

In a second implementation form of the method according to the fourth aspect as such of according to the first implementation form of the fourth aspect, the method obtains the measurements of the system memory areas by generating a hash digest over a content and meta-data of each memory area.

In a third implementation form of the method according to the fourth aspect, the method obtains the measurements of the system memory areas by generating a hash digest over a content of each memory area, identifies among the measured memory areas one or more groups, and generates a hash digest for the one or more identified groups of memory areas, wherein the hash digest of each identified group is calculated over the individual hash digests of the memory areas of the group.

In a fourth implementation form of the method according to the fourth aspect, the method obtains the measurements of the system memory areas by generating a hash digest over a content of each memory area, identifies among the measured memory areas one or more groups, and generates a hash digest for the one or more identified groups of memory areas, wherein the hash digest of each identified group is calculated over the individual byte values of the memory areas of the group.

In a fifth implementation form of the method according to the fourth aspect as such or according to any previous implementation form of the fourth aspect, the method obtains a plurality of additional measurements of the system memory during a loading process of the system; maintains each additional measurement individually in a static log; generates and anchors a fingerprint of the static log in a security module, and includes the static log and its anchored fingerprint into the system state report.

The method of the fourth aspect and its implementation forms achieve the advantages described above for the device of the first aspect and its implementation forms.

A fifth aspect of the present invention provides a method of verifying system states, wherein the method comprises the steps of receiving a system state report including a measurement log, which contains a plurality of measurements of all areas of a system memory, and a fingerprint of the measurement log generated by a security module, wherein the plurality of measurements includes measurements of (a) sections of an executable file mapped into separate segments in the system memory; and (b) segmented libraries and corresponding permissions into the system memory; verifying authenticity of the fingerprint based on a cryptographic key that identifies the security module; verifying integrity of the measurement log based on the verified fingerprint, if the fingerprint is authentic; verifying a reliability of each measurement in the measurement log based on a comparison of the measurement with a reference value, if the measurement log is of integrity, and determining that a system state is unaltered, if each measurements is reliable.

In a first implementation form of the device according to the fifth aspect, the method loads a trusted object code system file, extracts from the object code system file at least one portion related to memory area content, and simulates its loading process, in order to generate a reference value for a measurement, and judge the measurement reliable, if the generated reference value is equal to the measurement.

In a second implementation form of the method according to the fifth aspect as such or according to the first implementation form of the fifth aspect, the method precomputes and stores a reference value for each measurement, and judges a measurement reliable, if the precomputed and stored reference value is equal to the measurement.

In a third implementation form of the method according to the fifth aspect as such or according to any previous implementation form of the fifth aspect, the method generates a hash digest of the measurement log in the system state report, and compares the generated hash digest with the verified fingerprint, in order to determine the integrity of the measurement log.

The method of the fifth aspect and its implementation forms achieve the advantages described above for the device of the second aspect and its implementation forms.

A sixth aspect of the present invention provides a computer program product for implementing, when carried out on a computing device, a method according to the fourth aspect as such or according to any implementation form of the fourth aspect and/or a method according to the fifth aspect as such or according to any implementation form of the fifth aspect.

The computer program achieves the advantages described above for the methods of the fourth aspect and fifth aspect, respectively.

It has to be noted that all devices, elements, units and means described in the present application could be implemented in the software or hardware elements or any kind of combination thereof. All steps which are performed by the various entities described in the present application as well as the functionalities described to be performed by the various entities are intended to mean that the respective entity is adapted to or configured to perform the respective steps and functionalities.

Even if, in the following description of specific embodiments, a specific functionality or step to be full formed by eternal entities is not reflected in the description of a specific detailed element of that entity which performs that specific step or functionality, it should be clear for a skilled person that these methods and functionalities can be implemented in respective software or hardware elements, or any kind of combination thereof.

### BRIEF DESCRIPTION OF THE DRAWINGS

The above described aspects and implementation forms of the present invention will be explained in the following description of specific embodiments in relation to the enclosed drawings, in which:
- Fig. 1: shows a device of the first aspect according to an embodiment of the present invention.
- Fig. 2: shows a device of the second aspect according to an embodiment of the present invention.
- Fig. 3: shows a device of the first aspect according to an embodiment of the present invention.
- Fig. 4: shows a loading process of an ELF file.
- Fig. 5: shows a loading process of relocatable code into a memory.
- Fig. 6: shows a method of the fourth aspect according to an embodiment of the present invention.
- Fig. 7: shows a method of the fifth aspect according to an embodiment of the present invention.
- Fig. 8: shows an ELF file representation and a memory process image.
- Fig. 9: shows a mapping process of an ELF file to a memory.

### FOUNDATION OF THE INVENTION

In order to get a better understanding of the processes and mechanisms described below in the detailed description of embodiments, certain basic foundations are introduced for a better understanding of the technical details provided. If applicable, references are provided to literature or on-line resources providing more detail on certain concepts, on which embodiments of the present invention are built on.

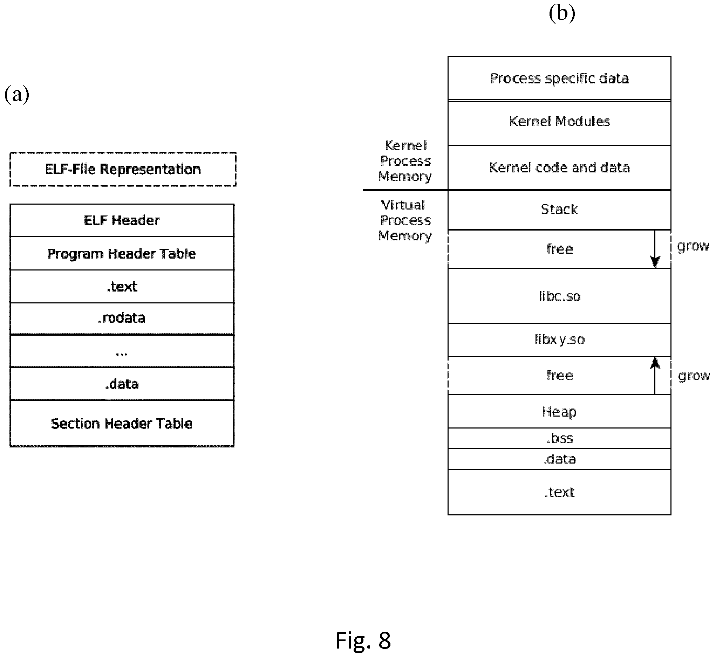

First, the concept of 'File to Memory Mapping' is explained. Especially in the context of loading and execution of applications, the executable files - e.g. in Linux the so called Executable and Linkable Format (ELF)-File - are not just copied into the system memory. As depicted in Fig. 8(a), within the ELF-File a defined structure is maintained that describes different segments holding specific data, which is required for executing an application on an operating system.

All the information of the file is used by the systems' loader component, which is responsible to load the individual segments of the ELF into the system memory. In addition to that, libraries utilized by the application are also loaded into the system memory, following nearly the same procedure. Once this process is finished, a memory representation is called a Process Memory Image (PMI). In addition to the PMI, two memory areas, namely Heap and Stack, are created. Once everything is correctly initialized, the control flow is given to the application, which is now running as a process within the operating system. A schematic process image is shown in Fig. 8(b).

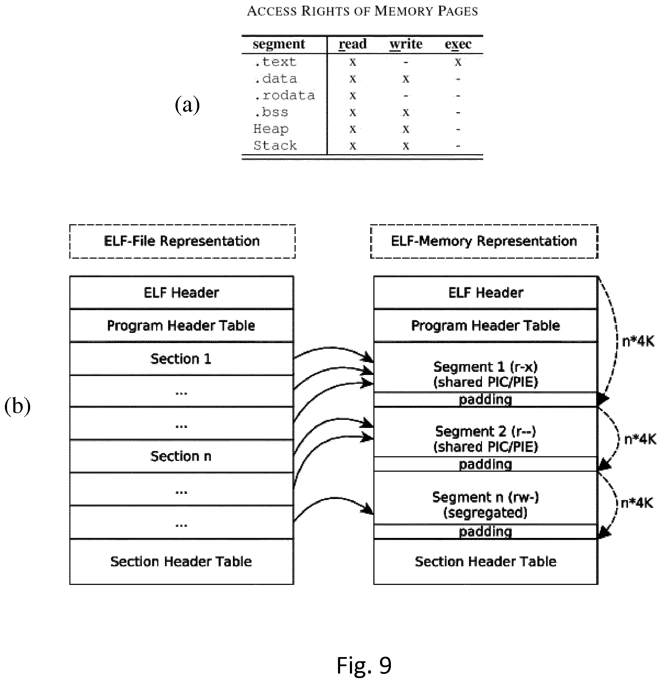

Next, 'Access Rights of Memory Mapped Segments' are explained. One security feature many kernels, e.g. in Linux, offer is the Data Execution Prevention (DEP) concept, which provides an implementation for memory pages. Memory areas like segments can be divided into different memory pages, which means that a single segment can adopt different access rights for different memory pages. In general, one can select between 'read', 'write', 'executable', and any possible combination of these three basic access rights. This enables every individual mapped segment to have particular access rights applied during the loading phase. For most standard segments, access rights are defined as shown in Fig. 9(a).

Consequently, any access to a certain memory area, which is not explicitly allowed, raises a runtime error and terminates the program or simply has no effect. The r,w,x access rights combination is usually not seen except for very specific cases (i.e. for self-modifying code). The concept is also adopted by hardware manufacturers like Intel and ARM providing hardware based support of flagging certain memory pages as 'not executable'.

However, there exist system calls (e.g. *mprotect* (in Linux) and *VirtualProtect* (in Windows)) that can alter the access rights for any given segment or page during runtime, no matter whether the access rights are hardware enforced or not. This means, once an adversary is able to utilize these system calls, which means modifying existing permission rights, the adversary can also inject arbitrary code into the process memory, and can dictate the system to execute the code. If the system is not specifically hardened against such modifications, which most of the legacy systems are not, a simple vulnerability is sufficient, in order to exploit the described access permission tampering and code injection.

Finally, 'Position Dependent and Relocatable Code' are explained. Conceptually, there exist two different characteristics that influence the loading process of an ELF significantly. Position Independent Code (PIC) or Position Independent Executable (PIE) is one of those characteristics. Position independent means that the source code was compiled in a particular way eliminating the use of direct memory addresses inside the .text segment. Necessary memory based address access (target addresses) are resolved in PIC with a Global Offset Table (GOT) mapped to a specific .got memory region.

To the contrary, Relocatable Code depends and uses direct memory addresses inside the .text segment to resolve memory target addresses. During the loading of the ELF, the loader receives a concrete memory region start address (offset address). Inside the ELF, certain placeholders exist, which are replaced during the relocation process by calculating relative or absolute target addresses, based on the given offset address. Consequently, this means in PIC/PIE the .text segment is loaded without modification regarding the ELF, and for relocatable code the .text segment is first patched with correct target addresses and then mapped into memory.

Both characteristics have certain benefits. While position independent code is often used for libraries, in order to share their .text segment with multiple processes to save memory space, relocatable code is considered faster in execution, as target address redirection over the GOT - in PIC - creates a certain overhead. It has to be noted that Position Independent Code is considered more secure, as certain functionalities like Address Space Layout Randomization (ASLR) can only be utilized if no direct jumps are inside the .text segment. Thus, most shared libraries in the field are indeed PIC, while PIE is not yet that common.

### DETAILED DESCRIPTION OF THE EMBODIMENTS

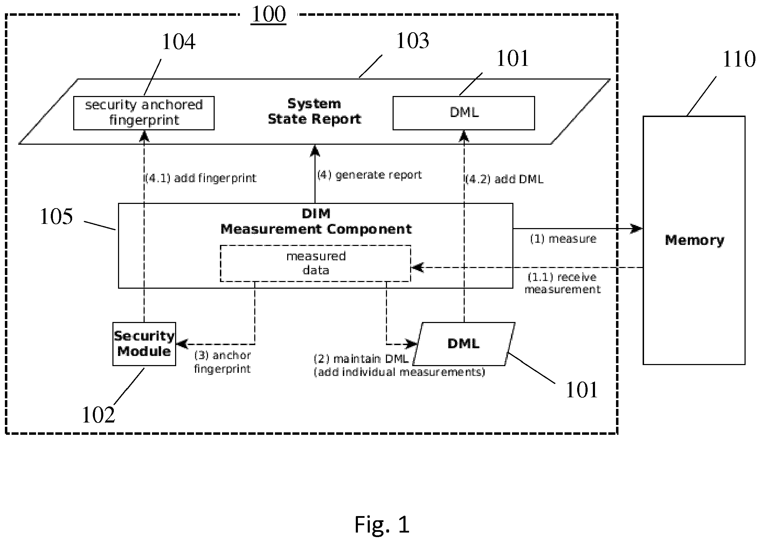

Fig. 1 shows a device 100 according to an embodiment of the present invention for measuring system states, wherein the device 100 is configured to carry out a Dynamic Integrity Measurement (DIM) process. To this end, the device 100 may include a DIM component 105 (in the following only "DIM"), reflecting its central point. The device 100 is specifically adapted to:
(1) Obtain a plurality of measurements of corresponding areas of a system memory 110 during runtime of the system. That is, the device 100 can accumulate individual measurements from the system memory 110. Thereby, (1.1) the device 100 can receive the individual measurements from the memory 110.
(2) Maintain each measurement individually in a measurement log 101, the log 101 being, for instance, a Dynamic Measurement Log (DML) as shown in Fig, 1. The device 100 can maintain the DML by appending the individual measurements.
(3) Generate and anchor at least one fingerprint of the measurement log 101 in a security module 102. For instance, the device 100 generates fingerprints, which reflect and protect a DMLs integrity, and anchors theses fingerprints into the security module 102, e.g. a TPM.
(4) Generate and send a system state report 103 including at least one anchored fingerprint 104 and the measurement log 101. The system state report 103 is reported particularly for later verification. Thereby, (4.1) the device 100 adds the security module anchored fingerprint 104, and (4.2) adds the measurement log 101, e.g. the DML, encapsulating all individual measurements to the system state report 103.

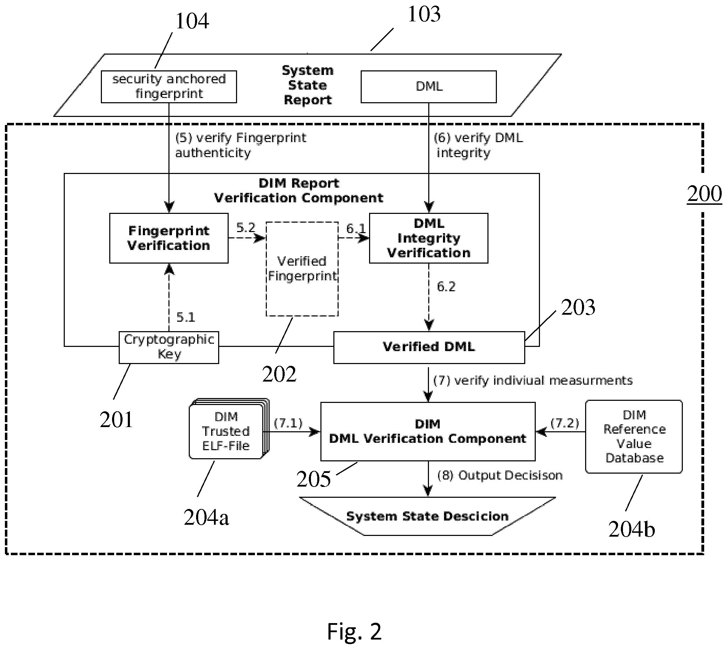

Fig. 2 shows a device 200 for verifying system states, wherein the device 200 is configured to carry out a report verification process. Initially, the device 200 receives a system state report 103 (see also (4), in Fig. 1), for example, from the device 100 of Fig. 1. The device 200 can be in the same local system as the device 100, or can be in an external verification system. The system state report 103 includes at least a measurement log 101, which again contains a plurality of measurements of a system memory 110, and a fingerprint 104 of the measurement log 101 generated by a security module 102.

The report verification process is based on the following operations, which the device 200 is specifically configured to carry out:
(5) Verify an authenticity of the fingerprint 104 based on a cryptographic key 201 that identifies the security module 102. To this end, (5.1) the device 200 loads a well-known cryptographic or signed key 201 identifying the security module 102 of the measured system, i.e. proving its correct behavior. In particular, (5.2.) the device 200 verifies the authenticity of the fingerprint 104 by using the loaded key 201. If the authenticity can be successfully verified, the verified fingerprint 202 can be used in subsequent operations.
(6) Verify integrity of the measurement log 101 based on the verified fingerprint 202, if the fingerprint 104 is authentic. For instance, the device 200 verifies the integrity of a transmitted DML by loading the DML from the system state report 103. During this process, a cryptographic hash sum may be calculated by a DML Integrity Verification Component 205 of the device 200, in particular by accumulating all significant individual values used to generate the fingerprint on the measured system. Further, (6.1) the device 200 compares the security module anchored verified fingerprint 202 against the self/calculated fingerprint. If both values are equal, the integrity of the received measurement log 101 is verified successfully. This means, the measurement log 101 was not modified during transportation to the device 200. The device 200 of Fig. 2 also carries out a verification process of the individual measured values. In particular, after the report 103 was successfully verified, the measurement log 101, e.g. the DML, can be considered as trusted and reliable (6.2). This means, the individual measured values can be analyzed, to identify, whether the system state is in a good/trusted state or not.

For the verification of the individual measurements, the device 200 is configured to:
(7) Verify a reliability of each measurement in the measurement log 101 based on a comparison of the measurement with a reference value 204a, 204b, if the measurement log 101 is of integrity. For example, for every individual measurement in the measurement log 101, e.g. in the DML, the DML Verification component 205 of the device 200 my try to generate or find valid reference values 204a, 204b.

This can, for instance, be done by (7.1) loading a trusted object code system file, extract from the object code system file at least one portion related to memory area content, and simulate its loading process, in order to generate a reference value 204a for a measurement, and judge the measurement reliable, if the generated reference value 204a is equal to the measurement. In particular, the device 200 can load Trusted DIM ELF-Files and the DML verification component 205 can then simulate the loading process to generate a valid reference value 204a.

Alternatively, (7.2) the device 200 can precompute and store a reference value 204b for each measurement, and can judge a measurement reliable, if the precomputed and stored reference value 204b is equal to the measurement. For instance, if a valid reference value 204b was found in a precomputed DIM Reference Value Database. In both cases - where a valid reference value 204a, 204b was successfully generated or found, the individual measurement is considered to be trustworthy. Moreover, the process is repeated for every accumulated individual measurement. If every individual measurement can be verified successfully, the whole system can be considered to behave as intended, meaning there was no illicit modification detected. That is, the device 200 determines that a system state is unaltered, if each measurement is verified as reliable. In addition to the aforementioned steps, additional verification steps, based on additional meta-data, like e.g. access permissions, sizes, etc., can also be applied during verification.

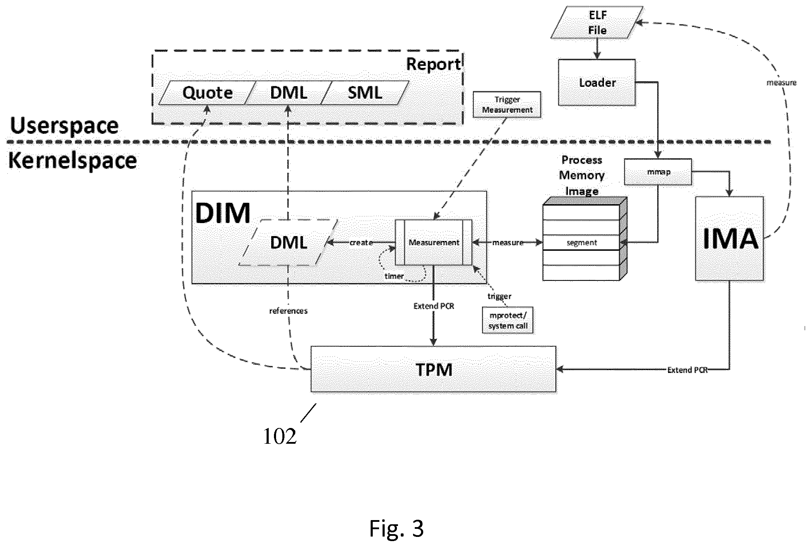

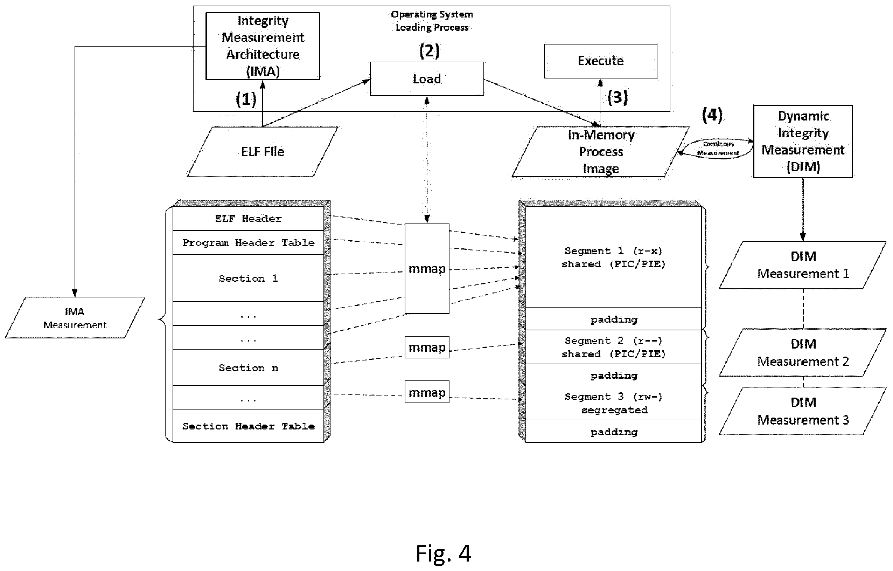

A specific architecture of the device 100 is shown in Fig. 3, and may include different components taking measurements of files and memory areas of the system. Additionally, Fig. 4 shows a process of a loading mechanism of an ELF-File, the transformation to the process image, and the individual segments measured, e.g. by the DIM 105 of the device 100.

It is noted that the device 100 expects certain met conditions provided by the underlying system, which may optionally be fulfilled, but are not an integral part of the measurement architecture itself. In particular, it is expected that the target system performs a secure or, at least, a measured boot process, and is equipped with dedicated hardware to do so. At the level of the present invention, it is not distinguished between hardware (e.g. a TPM) or software based security anchors (e.g. any other form of TPM devices, i.e. emulated, software or trust-zone based implementations).

Additionally, the device 100 may optionally work on an underlying system integrating IMA. IMA itself is responsible to measure each file that gets mapped into the system memory 110. This behavior is called static measurement of the system. Both, IMA and the DIM Concept of the present invention complement one another.

The device 100 in Fig. 3 according to an embodiment of the present invention, particularly employs IMA, and has designated involved components during the measurement. As shown, measurements of the system memory 110 are taken in both functional components, IMA 300 and DIM 105, with IMA 300 taking its measurement prior to DIM 105. To use all the information in a generated system state report 103, a IMA 300 generated SML 301, and the DIM generated DML (measurement log 101) and a TPM (security module 102) generated Quote (fingerprint 104) are components of the system state report 103. The Quote itself is a fingerprint 104 - in Trusted Computing with an involved TPM as a security module 102, the term Quote is used - as described earlier, but within the enhanced architecture the Quote provides a fingerprint 104 over both, SML 301 and DML 101.

The DIM architecture of device 100, as e.g. shown in Fig. 3, may be built around an enhancement to the Linux kernel, i.e. a Dynamic Integrity Measurement Kernel Module (DKM), which can either be a separate Kernel Module or may be compiled directly into the current kernel. From the kernel perspective, the complete system memory 110 can be accessed and therefore measured as the kernel is responsible to manage and coordinate all memory related aspects of a process.

Once a particular executable file is executed in user-space, the different sections of the file are mapped into separate segments into the virtual process memory 110. This is managed by the program loader and the kernel. Depending on the OS capabilities, each mapped segment may involve certain specific rights (e.g. r(ead), w(rite), and (e)x(ecute)). In addition, every library used by the process is also segmented and loaded into the virtual process memory 110 with its particular permission. After an executable and all dependent libraries are successfully loaded, the DIM 105 of device 100 is able to measure the currently mapped content of the system memory 110. For each process, the DIM 105 is able to measure all areas of the memory 110, optionally all mapped segments. Measuring means to build a hash digest over the memory content of the measured system memory area, e.g. a segment. Although the DIM can measure any mapped area, no matter of its current permissions or where it is mapped, for certain areas of the memory 100 the measurement of their content yields no interpretable results. In particular the measurement of writable segments is impracticable as those segments are expected to change during process runtime rendering verifiable measurement values infeasible.

In addition to memory area content measurements, the device 100 can also measure memory area permission flags. As explained above, usually write-able segments are not granted the executable flag preventing execution of injected code. Therefore, the current permissions of the memory area, in order to detect changes to those permission flags.

The DKM may be the responsible component to take the measurements. Different measurement schemes are possible, and each scheme yields different advantages in terms of computational effort and speed on the measurement and verification side, respectively, and in terms of size of the measurement log 101. In the following three preferred schemes are described.

In a first measurement scheme, the DKM provides a hash digest for every measured segment in the measurement log 101, e.g. the DML comprising all measured data. In particular, the following data is measured for executable and all loaded process libraries: Process ID, Memory Start Address, Hash Digest of Process Memory Content, Segment Permissions, Size, and Name of the involved ELF-File. For kernel and kernel module measurements, the Process ID may be omitted.

Technically, the individual digests are generated by iterating over mmap structure, calculating a hash digest for each mapped system memory area, and adding it to the measurement log 101. In the following we present a pseudo-algorithm is provided, in order to demonstrate the measurements.
*crypto_hash_init (&desc_exe);*
*crypto_hash_update (&desc_exe, exe→bytes*, *len*);
*crypto_hash_final (&desc_exe*, *hash_exe*);
*crypto_hash_init (&desc_lib_template);*
*for every mapped library segment:*
*crypto_hash_init (&desc_lib) ;*
*crypto_hash_update (&desc_lib*, *segment→bytes*, *len);*
*crypto_hash_final (&desc_lib*, *hash_lib);*
*crypto_hash_update (&desc_lib_template*, *(name* + *start_addr* + *len* + *hash_lib*,
*permissions)*, *len);*
*DML_LOG((name* + *start_addr* + *len* + *hash_lib, permissions)*
*endfor*
*crypto_hash_final (&desc_lib_template*, *hash_lib_template);*
*DML_LOG(pid*, *name* + *start_addr* + *len* + *hash_exe*, *permissions* , *hash_template)*

This means that every mapped memory area is measured individually by the DKM. In the following we provide a schematic example of a measurement log 101, specifically of a DML.

*Executable: pid: 1 name: init start: 10000000 len: 60744 digest:9AB44C3294... perm: rx-p library_cumulated_template_hash: BA3ECFD7F77D42B24D189FD4502D2F65CDED4DF45*

*Libraries:*
*name:* /*lib*/*libdl.so.2 start: fca9000 len:* 12288 *digest: 184D599FD7... perm: rx-p*
*name:* /*lib*/*libc.so.6 start: fccd000 len: 1368064 digest:463EEA34A4... perm: rx-p*
*name:* /*lib*/*ld.so.1 start: 48000000 len: 122880 digest: 5EE5B8004B... perm: rx-p*

For clarity reasons, both the pseudo-algorithm and the DML example only contain measurements of rx-segments being the measure memory area. The process for adding mapped areas or segments with different permissions is similar. In the case of measuring dynamic segments, the hash digest may be omitted and only permission flags are added.

The first measurement scheme has the advantage that a verification is very efficient and fast. Only a comparison of a measured value with a reference value is required, wherein reference values can be precomputed for PIC and stored in a database. The first scheme does not lose any information about what changed. Compared to the second and third measurement schemes presented further below, the first scheme is slower for the DKM, and the measurement log 101 becomes somewhat bigger (20 Bytes SHA1, 32 Bytes SHA256)

In addition to the depict measurements, also a template hash digest tpm template may be generated over (pid, name, start_addr, len, hash_exe,permissions, hash_template), which comprises all measured process data in a single hash digest, and thus can protect the integrity of all measured data.

In order to enable external verification of the measurements, during system reporting or other attestation processes, the measurements may be anchored into the TPM by extending a Platform Configuration Register (PCR). In particular, tpm template may be extended to a certain PCR by using the TPM's extend-function.3. The PCR can later be used in a remote attestation protocol for identifying the origin of the measurement, testifying the reliability of the information and, moreover, providing integrity information for the measurement.

The present invention also enables an external device or system to verify the current system state based on the measured values. A Remote Attestation Protocol known from IMA and SML reporting may be enhanced, in order to also include the measurements taken by the DKM. During attestation, use can be made of the extended PCR to verify the integrity of the data in the measurement log 101.

The attestation process can detect any modification made to the reported data. Neither the reporting system nor an intermediate instance may have any capability to modify the reported data without detection from the verifying system. As described, certain properties of the reports should be bound to the security module 102. This enables the external system to detect any modification made to the reports during the attestation process. It is assumed that once a system state is encapsulated within the TPM's PCR, there exists no way to disguise/modify the system state in an undetectable way. The only possible attack vectors on a PCR's integrity involve breaking the TPM and physically altering its PRCs, which requires a fantastic amount of effort, if possible at all. The overall system security of course depends on the security level of the TPM, whereas dedicated hardware based TPMs provide the highest and software-only based TPMs the lowest security level.

In order to decide, whether a system memory area measurement is reliable or not, usually reference values are utilized during verification or attestation processes. Depending on the type of the measured process area, i.e. a library, an executable, the kernel or a kernel module, and whether it is PIC/PIE or Relocatable code, different strategies may be applied.

Although every individual memory mapped area can be measured, as explained, not all areas maintain reproducible states. Usually, areas, e.g. segments without write access are always reproducible, whereas segments with write access (e.g. stack, heap, .data, .got, .plt) contain partially or completely real time system dependent data. Thus, for external verification, only the measurement of full or partial reproducible memory areas are considered. However, given the right heuristics or filters, analyzing highly dynamic memory areas could be feasible and maintained during measurements or during a local verification.

The first step of every verification process may be to verify the integrity of the given measurement log 101, e.g. the DML. Since every intermediate measured template hash digest, tpm template, was optionally anchored in the security module 102, e.g. the TPM, this value can be utilized to verify the integrity of the log 101. Therefore, the expected PCR value may be manually calculated based on the log 101, and it may be verified if the calculated value is equal to the PCR value generated by the TPM's tpm_quote() command. If both values are equal, the list in the log 101 was not modified, and therefore represents the current system state at the time the tpm_quote() was executed. After the integrity of the measurement log 101 is assured, the verification process continues to very every individual measurement.

In case that PIC/PIE is measured, reference values can be generated in advance, and stored in a reference database. By analyzing the ELF-File, one can determine, how much space is used by each memory area during its runtime. Consequently, based on this information, it is possible to generate reliable reference values, by calculating a hash value considering the area size. In particular, once the size of the system memory area is known, a hash algorithm can be used to calculate reference hash values, for different areas of the ELF-file. The information about the size, can be found in the header section of the particular ELF.

The verification process is based on a simple comparison between the measured values and a reliable stored reference values. Specifically this means, if a reference value exists which is equal to the measured area, the memory area was not unwillingly altered and thus resides in trustworthy state in memory.

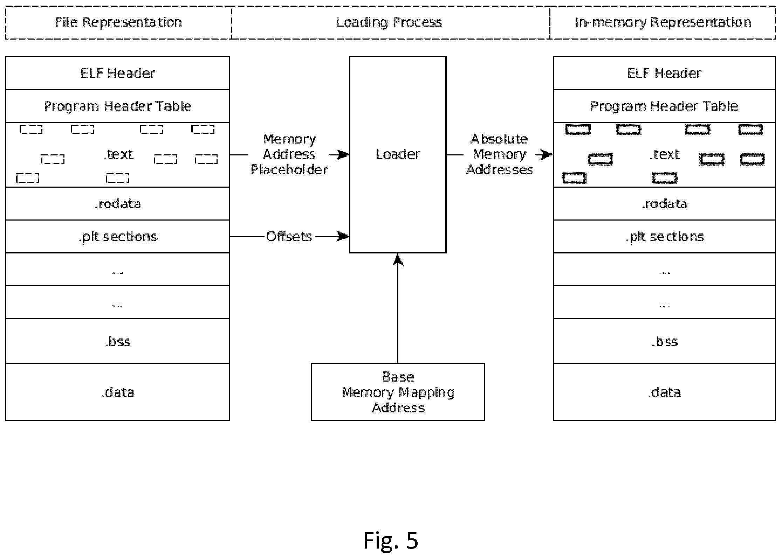

For relocatable code, it is not possible to generate reference values in advance, if Address Space Layout Randomization (ASLR) is enabled. Every new execution creates a different measured value as memory addresses are assigned randomly during load time (see Fig. 5). In order to verify the process image, the ELF-File has to be consulted and its loading process has to be simulated. In particular, this means the ELF-File is temporarily patched with the assigned memory addresses and afterwards a hash value of the patched ELF-File is calculated based on the measured segment size.

In the verification process, this temporary reference value can be used to verify the measured hash value of the measured process image segment. If both values are equal, the process image of the memory area was not altered and also resides in a trustworthy state in memory. The whole process has to be applied for every new instance of an executable. In contrast, if ASLR is not used on the target platform, reference values can be generated in advance by patching the ELF-File once with the known memory-addresses and using the patched ELF-Files area to generate a reference hash value.

Consequently, this means that the verification device 200 needs access to all ELF-Files that utilize relocatable code for creating measurements of relocated areas. While most system components utilize PIC/PIE code, at least nearly every Linux library uses PIC. The Linux Kernel Modules are components that particularly make use of described code relocation processes.

A second measurement scheme obtains the measurements of the system memory areas by generating a hash digest over a content of each memory area, identifies among the measured memory areas one or more groups, and generates a hash digest for the one or more identified groups of memory areas, wherein the hash digest of each identified group is calculated over the individual hash digests of the memory areas of the group. Specifically, the DKM can provide a hash digest for every measured executable and one hash digest for the libraries. The hash digest of the libraries is then calculated over their individual hash values. Basically the same mechanism may be used as the TPM extend() functionality. Each library optionally generates individual hash digests *dlib₀ : : : dlibₙ.* Those values may be concatenated resulting in a single hash digest for all libraries.
*result* = *sha1(sha1(dlib0)*|*sha1(: :* :)|*sha1(dlibₙ))*
| denotes concatenation.

Furthermore, additional information can be provided like start addresses and sizes.
*1 init start: 10000000 end: 100ea8e8 len:960744 digest:9AB44C3294...*
*libraries digest:1FADD34927AB44F432834D189FD45021C422655D*
/*lib*/*libdl.so.2 start: fca9000 end: fcac000 len:12288*
/*lib*/*libc.so.6 start: fccd000 end: fe1b000 len:1368064*
/*lib*/*libsepol.so.1 (deleted) start: fe43000 end: fe84000 len:266240*
/*lib*/*libselinux.so.1 (deleted) start: fea5000 end: fec4000 len:126976*
/*lib*/*libm.so.6 (deleted) start: fee6000 end: ff8b000 len:675840*
/*lib*/*libcrypt.so.1 (deleted) start: ffaf000 end: ffb8000 len:36864*
/*lib*/*ld.so.1 start: 48000000 end: 4801e000 len:122880*

The following pseudo-algorithm shows an example measurement with intermediate hash digests:
*crypto_hash_init (&desc);*
*for every mapped segement:*
*crypto_hash_init (&desc2);*
*crypto_hash_update (&desc2* , *segment→bytes*, *len);*
*crypto_hash_final (&desc2* , *hash_intermediate);*
*crypto_hash_update (&desc2* , *hash_intermediate*, *len (hash_intermediate)) ;*
*endfor*
*crypto_hash_final (&desc* , *hash);*
*DML_LOG("libraries digest:* "+ *hash*)

The verification process with respect to the second measurement scheme is more complex than with respect to the first measurement scheme, and only efficient if additional boundary conditions are met. The possibility to use a precomputed database of reliable hash values is an immense benefit for the verification speed and limits the necessary storage space to NOPIC files only.

To generate PIC and NOPIC hash digest, optionally at first a hash digest from a DML is taken. All following operations for DIM are then executed in the same order as measurements in DKM were taken. For PIC, it is searched for a reliable hash digest in a database based on filename and version. Then, the hash digest from the database (dlibₙ) is taken. For NOPIC, an ELF-File is loaded based on filename and version. The ELF-File is then patched with a start address. Then hash digests (dreloclibₙ) are calculated.

A hash digest is built over intermediate values:
*r* = *sha1(dlib₀*|*: : :*|*dreloclibₙ*|*: : :*|*dreloclibₙ)*

Then measured hash digest and expected result r are compared. If they are equal, the library measurement was reliable.

To follow this process, version information has to be included in the DML. Since this information is not available to DKM, the process remains only highly efficient as long as only one valid reference value is in the database per library. As soon as multiple versions are maintained within the Reference Database for any library, computational effort may grow significantly larger, as it depends on the number of different libraries and their actual amount. In order to calculate the correct hash, each possible combination has to be computed in the worst case until a valid reference value can be verified. The second measurement scheme is thus preferred for smaller deployed systems with a flexible environment and different software versions.

The second measurement scheme has particularly the advantage that the verification is fast in a controlled software environment, since reference values can be precomputed and stored in a database. Furthermore, the size of a measurement log 101, e.g. DML, decreases by 20 Byes using SHA-1 hashes and 32 Bytes using SHA-256 for each measured library. On the other hand, a large uncontrolled software environment is harder to verify and might render verification difficult. Additionally, the verification might be slower for a DKM and there is increased risk of information, about which library was modified, to get lost.

A third measurement scheme obtains the measurements of the system memory areas by generating a hash digest over a content of each memory area, identifies among the measured memory areas one or more groups, and generates a hash digest for the one or more identified groups of memory areas, wherein the hash digest of each identified group is calculated over the individual byte values of the memory areas of the group. Specifically, the DKM can provide a hash digest for every measured executable, and one hash digest for the libraries. The hash digest of the libraries is calculated over their individual byte values libbyteso : : : libbytesₙ. Each library generates individual hash digests dlibo : : : dlibₙ. Those values are concatenated resulting in a single hash digest for all libraries.
*result* = *sha1(libbytes₀*| *: : :* |*libbytesₙ)*
| denotes concatenation.

Furthermore additional information may be provided like start addresses and sizes.
*1 init start: 10000000 end: 100ea8e8 len:960744*
*digest:9AB44C329430753A43DFBA3ECCC521132E73D1D1*
*libraries digest:9AB44C329430753A43DFBA3ECCC521132E73D1D1*
/*lib*/*libdl.so.2 start: fca9000 end: fcac000 len:12288*
/*lib*/*libc.so.6 start: fccd000 end: fe1b000 len:1368064*
/*lib*/*libsepol.so.1 (deleted) start: fe43000 end: fe84000 len:266240*
/*lib*/*libselinux.so.1 (deleted) start: fea5000 end: fec4000 len:126976*
/*lib*/*libm.so.6 (deleted) start: fee6000 end: ff8b000 len:675840*
/*lib*/*libcrypt.so.1 (deleted) start: ffaf000 end: ffb8000 len:36864*
/*lib*/*ld.so.1 start: 48000000 end: 4801e000 len:122880*
*(The current DML inherent data is only a draft)*

A pseudo-algorithm for an exemplary measurements may be:
*crypto_hash_init (&desc);*
*for every mapped segement:*
*crypto_hash_update (&desc*, *segment→bytes*, *len);*
*endfor*
*crypto_hash_final (&desc, hash*);
*DML_LOG("libraries digest:"+ hash)*

The verification is more complex. It is not possible to maintain a database with reliable hash digests, as individual digests are not used in the measurement scheme. Consequently, reference values may be generated each time on-the-fly, while all to-be-measured ELF-Files remain on the verification device 200. It may be possible to cache those computed temporary reference values on the verification side.

To generate PIC and NOPIC hash digest, first a hash digest from the DML is taken. All following operations for DIM must be executed in the same order as measurements in the DKM were taken. For both PIC and NOPIC, an ELF-File is loaded based on filename and version. For NOPIC only, the ELF-File is patched with a start address. Then a hash value over a measured area is calculated as:
*r* = *sha1(libbytes₀*| *: : :* |*libbytesₙ)*

Finally, the measured hash digest and expected result r is compared. If they are equal, a library measurement was reliable.

The second measurement scheme provides for the fastest calculation for the DKM and the log 101, e.g. the DML, size decreases by 20 Bytes using SHA-1 or 32 Bytes using SHA-256 for each entry, e.g. a measured library. However, the second scheme is not preferred, if it is applied in large uncontrolled software environments. Furthermore, the calculations for each verification are slower than for the other schemes, and a pre-calculation for PIC is not an option. As a result, a reference database is not possible, and a risk of losing information, about which specific library was modified, increases.

In conclusion, three different schemes are provided to verify measurements taken by the DKM. The most valuable metrics are certainly the computational effort in the DKM and the computational effort during verification. While the computational effort in the DKM remains O(n), it differs for the verification.

The first measurement scheme provides the most information, i.e. all information is preserved regarding which measurement failed specifically, and maintains the fastest speed during verification. It is expected to be not as fast during DKM measurements, since for each ELF-File a dedicated hash digest has to be created. Additionally, the first scheme creates the most data in the DML, since for each measurement the hash digest is inserted into DML. This increases the size for each measured entry by 20 Bytes (sha1) or 32 Bytes (sha256). However, this additional information enables the verifier to determine the current software version and in case a malicious modification was detected which particular library was affected. This is not possible for any of the other described schemes. Additionally, another advantage of the first scheme is the possibility of maintaining a reference-value database with pre-calculated hash digests for PIC executables and libraries that significantly increases verification speed.

The second measurement scheme is a trade-off regarding size of the DML and verification speed. It is preferred for small deployments in heavy controlled systems. The generation process within DKM is expected to be the slowest for all proposed schemes. For PIC executables and libraries a reference value database can be maintained equally to the first scheme. However, in case an unintentional modification has happened, the information which measurement was corrupted may be lost during hash digest chain generation.

The third measurement scheme performs best on the DKM side regarding computational effort as only one single hash value needs to be computed comprising all data of the mapped and measured segments. By using this third scheme, it is, however, not possible to use pre-calculated reference hash digest values at all. For every measurement the reference digest has to be re-calculated explicitly. The procedure is equal to the NOPIC reference value generation without the necessity to patch the ELF-File with a start address. Additionally, all ELF-Files need to be present at the verifier or one of its storages which increases the necessary amount of space significantly compared to the other schemes. Similar to the second scheme, information about the corrupted source may be lost during the hash digest generation. The second scheme also becomes more complex as soon as reference values for multiple versions for libraries become necessary.

In another embodiment of the present invention, specifically for a slightly simplified alternative to the previously mentioned solutions, masquerading of all information modified during the loading process can be applied. That means, the device 100 may implement the masquerading. The information typically modified when an ELF file is loaded into the memory is memory addresses. Consequently, a solution using MMA functions exactly as the proposed invention for PIC code, in which case only a hash is calculated since there are no dynamic changes to the code segments. MMA significantly eases the reference value computation and therefore overall computational cost by masquerading information that changes during the loading process rendering a sophisticated loading process simulation, as proposed, superfluous. Masquerading could be implemented by ignoring these segments or covering up position dependent/absolute addresses with a defined value. This reduced computational speed is gained through loss of information. Any modifications to position dependent/absolute addresses in the memory representation would not be detected. Reporting and verification can be done using the proposed first, second or third measurement scheme, with reduced computational effort for schemes requiring and hoc computation of reference values.

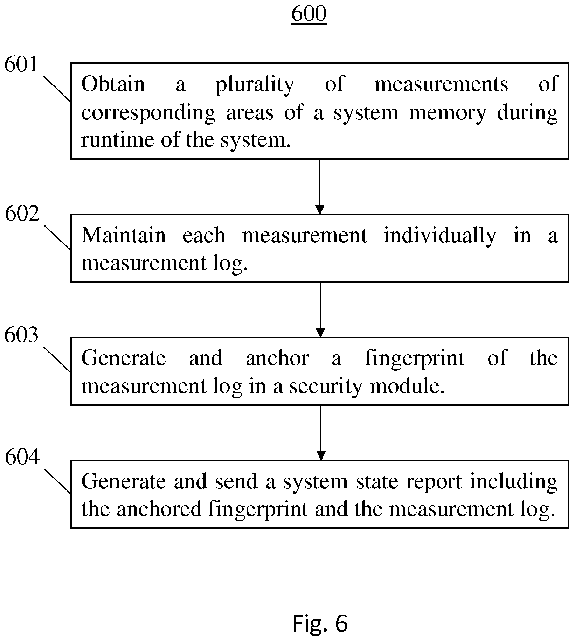

Fig. 6 shows a method 600 for measuring system states according to an embodiment of the present invention. The method 600 can be carried out by a device 100 according to Fig. 1. In a first step 601 of the method 600, a plurality of measurements of corresponding areas of a system memory 110 during runtime of the system is obtained. In a second step 602, each measurement is maintained individually in a measurement log 101, e.g. DML. In a third step 603 a fingerprint of the measurement log 101 is generated and anchored in a security module 102, e.g. a TPM. In a fourth step 604, a system state report 103 including the anchored fingerprint 104 and the measurement log 101 is sent. The system state report is e.g. sent to a device 200 according to Fig. 2. The devices 100 and 200 of Figs. 1 and 2 may for a system according to an embodiment of the present invention.

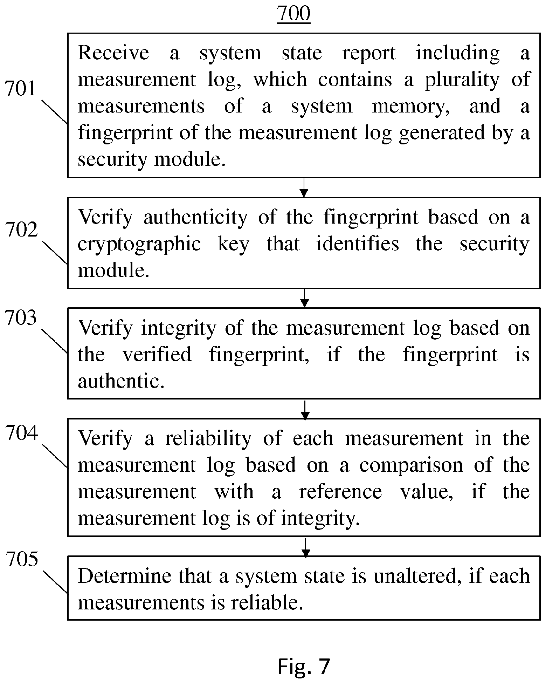

Fig. 7 shows a method 700 for verifying system states. The method can be carried out by a device 200 according to Fig. 2. In a first step 701, a system state report 103 is received, the report 103 including a measurement log 101, which contains a plurality of measurements of a system memory 110, and a fingerprint 104 of the measurement log 101 generated by a security module 102. In a second step 702, authenticity of the fingerprint 104 is verified based on a cryptographic key 201 that identifies the security module 102. In a third step 703, integrity of the measurement log 101 is verified based on the verified fingerprint 202, if the fingerprint 104 is authentic. In a fourth step 704, a reliability of each measurement in the measurement log 101 is verified based on a comparison of the measurement with a reference value, if the measurement log is of integrity. Finally, in a fifth step 705, it is determine that a system state is unaltered, if each measurements is reliable.

A major benefit of all embodiments of the present invention is that measurement, reporting and verification processes of runtime information can be integrated into well established and used TC technology. This presents a significant improvement over conventional concepts describing static file-based measurement and verification processes. In order to achieve this benefit, the accumulated information is anchored in the security module 102 (specifically in a TPM). This enables the present invention to consider measurements from both static as well as dynamic runtime information to get a comprehensive view of a particular system state. Whereas conventional solutions consider system states only up to the loading process, the present invention enhances those system states to consider runtime states of executed system components. This significantly improves the former approach, to even detect modification to the system executed at runtime of individual system components.

The present invention has been described in conjunction with various embodiments as examples as well as implementations. However, other variations can be understood and effected by those persons skilled in the art and practicing the claimed invention, from the studies of the drawings, this disclosure and the independent claims. In the claims as well as in the description the word "comprising" does not exclude other elements or steps and the indefinite article "a" or "an" does not exclude a plurality. A single element or other unit may fulfill the functions of several entities or items recited in the claims. The mere fact that certain measures are recited in the mutual different dependent claims does not indicate that a combination of these measures cannot be used in an advantageous implementation.

## Claims

1. Device (100) for measuring system states, wherein the device (100) is configured to map sections of an executable file being executed as a process into separate segments in a system memory;
segment every library used by the process and load the segmented libraries and corresponding permissions into the system memory;
obtain a plurality of measurements for the process of all areas of the system memory (110) during runtime of the system and of the mapped segments;
maintain each measurement individually in a measurement log (101);
generate and anchor a fingerprint of the measurement log (101) in a security module (102), and
generate and send a system state report (103) including the anchored fingerprint (104) and the measurement log (101).

2. Device (100) according to claim 1, wherein the device (100) is configured to
obtain the measurements of the system memory areas by generating a hash digest over a content of each memory area.

3. Device (100) according to claim 1 or 2, wherein the device (100) is configured to
obtain the measurements of the system memory areas by generating a hash digest over a content and meta-data of each memory area.

4. Device (100) according to claim 1, wherein the device (100) is configured to
obtain the measurements of the system memory areas by generating a hash digest over a content of each memory area,
identify among the measured memory areas one or more groups, and
generate a hash digest for the one or more identified groups of memory areas, wherein the hash digest of each identified group is calculated over the individual hash digests of the memory areas of the group.

5. Device (100) according to claim 1, wherein the device (100) is configured to
obtain the measurements of the system memory areas by generating a hash digest over a content of each memory area,
identify among the measured memory areas one or more groups, and
generate a hash digest for the one or more identified groups of memory areas, wherein the hash digest of each identified group is calculated over the individual byte values of the memory areas of the group.

6. Device (100) according to one of the claims 1 to 5, wherein the device (100) is further configured to
obtain a plurality of additional measurements of the system memory areas during a loading process of the system;
maintain each additional measurement individually in a static log (300);
generate and anchor a fingerprint of the static log in a security module (102), and include the static log (300) and its anchored fingerprint into the system state report (103).

7. Device (200) for verifying system states, wherein the device (200) is configured to
receive a system state report (103) including a measurement log (101), which contains a plurality of measurements of all areas of a system memory (110), and a fingerprint (104) of the measurement log (101) generated by a security module (102), wherein the plurality of measurements includes measurements of (a) sections of an executable file mapped into separate segments in the system memory; and (b) segmented libraries and corresponding permissions into the system memory;
verify authenticity of the fingerprint (104) based on a cryptographic key (201) that identifies the security module (102);
verify integrity of the measurement log (101) based on the verified fingerprint (202), if the fingerprint (104) is authentic;
verify a reliability of each measurement in the measurement log (101) based on a comparison of the measurement with a reference value (204a, 204b), if the measurement log (101) is of integrity, and
determine that a system state is unaltered, if each measurement is verified as reliable.

8. Device (200) according to claim 7, wherein the device (200) is configured to
load a trusted object code system file, extract from the object code system file at least one portion related to memory area content, and simulate its loading process, in order to generate a reference value (204a) for a measurement, and
judge the measurement reliable, if the generated reference value (204a) is equal to the measurement.

9. Device (200) according to claim 7 or 8, wherein the device (200) is configured to precompute and store a reference value (204b) for each measurement, and
judge a measurement reliable, if the precomputed and stored reference value (204b) is equal to the measurement.

10. Device (200) according to one of the claims 7 to 9, wherein the device (200) is configured to
generate a hash digest of the measurement log (101) in the system state report (103), and
compare the generated hash digest with the verified fingerprint (202), in order to determine the integrity of the measurement log (101).

11. Devices system for measuring and verifying system states, the device system comprising a device (100) according to one of the claims 1 to 6 and a device (200) according to one of the claims 7 to 10.

12. Method (600) of measuring system states, wherein the method comprises the steps of mapping sections of an executable file being executed as a process into separate segments in a system memory;
segmenting every library used by the process and loading the segmented libraries and corresponding permissions into the system memory;
obtaining (601) a plurality of measurements for the process of all areas of a system memory (110) during runtime of the system and of the mapped segments;
maintaining (602) each measurement individually in a measurement log (101);
generating and anchoring (603) a fingerprint of the measurement log (101) in a security module (102), and
generating and sending (604) a system state report (103) including the anchored fingerprint (104) and the measurement log (101).

13. Method (700) of verifying system states, wherein the method comprises the steps of
receiving (701) a system state report (103) including a measurement log (101), which contains a plurality of measurements of all areas of a system memory (110), and a fingerprint (104) of the measurement log (101) generated by a security module (102), wherein the plurality of measurements includes measurements of (a) sections of an executable file mapped into separate segments in the system memory; and (b) segmented libraries and corresponding permissions into the system memory;
verifying (702) authenticity of the fingerprint (104) based on a cryptographic key (201) that identifies the security module (102);
verifying (703) integrity of the measurement log (101) based on the verified fingerprint (202), if the fingerprint (104) is authentic;
verifying (704) a reliability of each measurement in the measurement log (101) based on a comparison of the measurement with a reference value (204a), if the measurement log (101) is of integrity, and
determining (705) that a system state is unaltered, if each measurements is reliable.

14. Computer program product for implementing, when carried out on a computing device, a method (600) according to claim 12 and/or a method (700) according to claim 13.

## Patentansprüche

1. Vorrichtung (100) zum Messen von Systemzuständen, wobei die Vorrichtung (100) konfiguriert ist zum:
Zuordnen von Abschnitten einer ausführbaren Datei, die als ein Prozess ausgeführt wird, zu separaten Segmenten in einem Systemspeicher;
Segmentieren aller Bibliotheken, die von dem Prozess verwendet werden, und Laden der segmentierten Bibliotheken und der entsprechenden Berechtigungen in den Systemspeicher;
Erhalten einer Vielzahl von Messungen für den Prozess von allen Bereichen des Systemspeichers (110) während der Laufzeit des Systems und der zugeordneten Segmente;
individuellen Aufbewahren aller Messungen in einem Messprotokoll (101);
Erzeugen und Sicherstellen eines Fingerabdrucks des Messprotokolls (101) in einem Sicherheitsmodul (102); und
Erzeugen und Senden eines Systemzustandsberichts (103), der den sichergestellten Fingerabdruck (104) und das Messprotokoll (101) enthält.

2. Vorrichtung (100) nach Anspruch 1, wobei die Vorrichtung (100) konfiguriert ist zum Erhalten der Messungen der Systemspeicherbereiche, indem eine Hashwert-Auswahl über einen Inhalt von jedem Speicherbereich erzeugt wird.

3. Vorrichtung (100) nach Anspruch 1 oder 2, wobei die Vorrichtung (100) konfiguriert ist zum
Erhalten der Messungen der Systemspeicherbereiche, indem eine Hashwert-Auswahl über einen Inhalt und Metadaten von jedem Speicherbereich erzeugt werden.

4. Vorrichtung (100) nach Anspruch 1, wobei die Vorrichtung (100) konfiguriert ist zum:
Erhalten der Messungen der Systemspeicherbereiche, indem eine Hashwert-Auswahl über einen Inhalt von jedem Speicherbereich erzeugt wird;
Identifizieren einer oder mehrerer Gruppen in den gemessenen Speicherbereichen und Erzeugen einer Hashwert-Auswahl für die eine oder mehreren identifizierten Gruppen der Speicherbereiche, wobei die Hashwert-Auswahl für jede identifizierte Gruppe über die individuellen Hashwert-Auswahlen der Speicherbereiche der Gruppe berechnet werden.

5. Vorrichtung (100) nach Anspruch 1, wobei die Vorrichtung (100) konfiguriert ist zum:
Erhalten der Messungen der Systemspeicherbereiche, indem eine Hashwert-Auswahl über einen Inhalt von jedem Speicherbereich erzeugt wird;
Identifizieren einer oder mehrerer Gruppen in den gemessenen Speicherbereichen und Erzeugen einer Hashwert-Auswahl für die eine oder mehreren Gruppen der Speicherbereiche, wobei die Hashwert-Auswahl für jede identifizierte Gruppe über die individuellen Bytewerte der Speicherbereiche der Gruppe berechnet werden.

6. Vorrichtung (100) nach einem der Ansprüche 1 bis 5, wobei die Vorrichtung (100) außerdem konfiguriert ist zum:
Erhalten einer Vielzahl von zusätzlichen Messungen der Systemspeicherbereiche während eines Ladeprozesses des Systems;
individuellen Aufbewahren aller zusätzlichen Messungen in einem statischen Protokoll (300);
Erzeugen und Sicherstellen eines Fingerabdrucks des statischen Protokolls in einem Sicherheitsmodul (102) und Einfügen des statischen Protokolls (300) und seines sichergestellten Fingerabdrucks in den Systemzustandsbericht (103).

7. Vorrichtung (200) zum Bestätigen von Systemzuständen, wobei die Vorrichtung (200) konfiguriert ist zum:
Empfangen eines Systemzustandsberichts (103), der ein Messprotokoll (101), das eine Vielzahl von Messungen von allen Bereichen eines Systemspeichers (110) beinhaltet, und einen Fingerabdruck (104) des Messprotokolls (101) enthält, der von einem Sicherheitsmodul (102) erzeugt wird, wobei die Vielzahl von Messungen Messungen aufweisen von (a) Abschnitten einer ausführbaren Datei, die separaten Segmenten in einem Systemspeicher zugeordnet werden; und (b) segmentierten Bibliotheken und entsprechender Berechtigungen in dem Systemspeicher;
Bestätigen der Echtheit des Fingerabdrucks (104) aufgrund eines kryptografischen Schlüssels (201), der das Sicherheitsmodul (102) identifiziert;
Bestätigen der Unversehrtheit des Messprotokolls (101) aufgrund des bestätigten Fingerabdrucks (202), wenn der Fingerabdruck (104) echt ist;
Bestätigen einer Verlässlichkeit von jeder Messung in dem Messprotokoll (101) aufgrund eines Vergleichs der Messung mit einem Bezugswert (204a, 204b), wenn das Messprotokoll (101) unversehrt ist, und
Ermitteln, dass ein Systemzustand unverändert ist, wenn jede Messung als verlässlich bestätigt wird.

8. Vorrichtung (200) nach Anspruch 7, wobei die Vorrichtung (200) konfiguriert ist zum Laden einer vertrauenswürdigen Objektcodesystemdatei; Extrahieren aus der Objektcodesystemdatei mindestens eines Abschnitts, der sich auf den Speicherbereichsinhalt bezieht; und Simulieren ihres Ladeprozesses, um einen Bezugswert (204a) für eine Messung zu erzeugen; und
Beurteilen, dass die Messung verlässlich ist, wenn der erzeugte Bezugswert (204a) gleich der Messung ist.

9. Vorrichtung (200) nach Anspruch 7 oder 8, wobei die Vorrichtung (200) konfiguriert ist zum
vorab Berechnen und Speichern eines Bezugswerts (204b) für jede Messung und Beurteilen, dass die Messung verlässlich ist, wenn der vorab berechnete und gespeicherte Bezugswert (204b) gleich der Messung ist.

10. Vorrichtung (200) nach einem der Ansprüche 7 bis 9, wobei die Vorrichtung (200) konfiguriert ist zum:
Erzeugen einer Hashwert-Auswahl des Messprotokolls (101) in dem Systemzustandsbericht (103) und
Vergleichen der erzeugten Hashwert-Auswahl mit dem bestätigten Fingerabdruck (202), um die Unversehrtheit des Messprotokolls (101) zu ermitteln.

11. Vorrichtungssystem zum Messen und Bestätigen von Systemzuständen, wobei das Vorrichtungssystem eine Vorrichtung (100) nach einem der Ansprüche 1 bis 6 und eine Vorrichtung (200) nach einem der Ansprüche 7 bis 10 umfasst.

12. Verfahren (600) zum Messen von Systemzuständen, wobei das Verfahren die folgenden Schritte umfasst:
Zuordnen von Abschnitten einer ausführbaren Datei, die als ein Prozess ausgeführt wird, zu separaten Segmenten in einem Systemspeicher;
Segmentieren aller Bibliotheken, die von dem Prozess verwendet werden und Laden der segmentierten Bibliotheken und entsprechender Berechtigungen in dem Systemspeicher;
Erhalten (601) einer Vielzahl von Messungen für den Prozess von allen Bereichen eines Systemspeichers (110) während der Laufzeit des Systems und der zugeordneten Segmente;
individuellen (602) Aufbewahren aller Messungen in einem Messprotokoll (101); Erzeugen und Sicherstellen (603) eines Fingerabdrucks des Messprotokolls (101) in einem Sicherheitsmodul (102); und
Erzeugen und Senden (604) eines Systemzustandsberichts (103), der den sichergestellten Fingerabdruck (104) und das Messprotokoll (101) enthält.

13. Verfahren (700) zum Bestätigen von Systemzuständen, wobei das Verfahren die folgenden Schritte umfasst:
Empfangen (701) eines Systemzustandsberichts (103), der das Messprotokoll (101), das eine Vielzahl von Messungen von allen Bereichen eines Systemspeichers (110) beinhaltet, und einen Fingerabdruck (104) des Messprotokolls (101) enthält, der von einem Sicherheitsmodul (102) erzeugt wird, wobei die Vielzahl von Messungen Messungen aufweisen von (a) Abschnitten einer ausführbaren Datei, die separaten Segmenten in einem Systemspeicher zugeordnet werden; und (b) segmentierten Bibliotheken und entsprechenden Berechtigungen in dem Systemspeicher;
Bestätigen (702) der Echtheit des Fingerabdrucks (104) aufgrund eines kryptografischen Schlüssels (201), der das Sicherheitsmodul (102) identifiziert;
Bestätigen (703) der Unversehrtheit des Messprotokolls (101) aufgrund des bestätigten Fingerabdrucks (202), wenn der Fingerabdruck (104) echt ist;
Bestätigen (704) einer Verlässlichkeit von jeder Messung in dem Messprotokoll (101) aufgrund eines Vergleichs der Messung mit einem Bezugswert (204a), wenn das Messprotokoll (101) unversehrt ist, und
Ermitteln (705), dass ein Systemzustand unverändert ist, wenn jede Messung verlässlich ist.

14. Computerprogrammprodukt, das wenn es in einer Computervorrichtung ausgeführt wird, geeignet ist zum Umsetzen eines Verfahrens (600) nach Anspruch 12 und/oder eines Verfahrens (700) nach Anspruch 13.

## Revendications

1. Dispositif (100) permettant de mesurer des états de système, dans lequel le dispositif (100) est conçu pour :
mapper des sections d'un fichier exécutable qui est exécuté comme un processus dans des segments séparés dans une mémoire système ;
segmenter chaque bibliothèque utilisée par le processus et charger les bibliothèques segmentées et les permissions correspondantes dans la mémoire système ;
obtenir une pluralité de mesures pour le processus de toutes les zones de la mémoire système (110) pendant le temps d'exécution du système et des segments mappés ;
conserver chaque mesure individuellement dans un journal de mesures (101) ;
générer et ancrer une empreinte digitale du journal de mesures (101) dans un module de sécurité (102), et
générer et envoyer un rapport d'état de système (103) comprenant l'empreinte digitale ancrée (104) et le journal de mesures (101).

2. Dispositif (100) selon la revendication 1, dans lequel le dispositif (100) est conçu pour obtenir les mesures des zones de mémoire système en générant une empreinte numérique de hachage sur un contenu de chaque zone de mémoire.

3. Dispositif (100) selon la revendication 1 ou 2, dans lequel le dispositif (100) est conçu pour obtenir les mesures des zones de mémoire système en générant une empreinte numérique de hachage sur un contenu et des métadonnées de chaque zone de mémoire.

4. Dispositif (100) selon la revendication 1, dans lequel le dispositif (100) est conçu pour obtenir les mesures des zones de mémoire système en générant une empreinte numérique de hachage sur un contenu de chaque zone de mémoire,
identifier parmi les zones de mémoire mesurées un ou plusieurs groupes, et
générer une empreinte numérique de hachage pour le ou les groupes identifiés des zones de mémoire, l'empreinte numérique de hachage de chaque groupe identifié étant calculée sur les empreintes numériques de hachage individuelles des zones de mémoire du groupe.

5. Dispositif (100) selon la revendication 1, dans lequel le dispositif (100) est conçu pour :
obtenir les mesures des zones de mémoire système en générant une empreinte numérique de hachage sur un contenu de chaque zone de mémoire, identifier, parmi les zones de mémoire mesurées, un ou plusieurs groupes, et
générer une empreinte numérique de hachage pour le ou les groupes identifiés des zones de mémoire, l'empreinte numérique de hachage de chaque groupe identifié étant calculée sur les valeurs d'octets individuelles des zones de mémoire du groupe.

6. Dispositif (100) selon l'une des revendications 1 à 5, dans lequel le dispositif (100) est conçu en outre pour :
obtenir une pluralité de mesures supplémentaires des zones de mémoire système pendant un processus de chargement du système ;
conserver chaque mesure supplémentaire individuellement dans un journal statique (300) ;
générer et ancrer une empreinte digitale du journal statique dans un module de sécurité (102), et
inclure le journal statique (300) et son empreinte digitale ancrée dans le rapport d'état de système (103).

7. Dispositif (200) permettant de vérifier des états de système, dans lequel le dispositif (200) est conçu pour :
recevoir un rapport d'état de système (103) comprenant un journal de mesures (101), qui contient une pluralité de mesures de toutes les zones dans une mémoire système (110), et une empreinte digitale (104) du journal de mesures (101) générée par un module de sécurité (102), la pluralité de mesures comprenant des mesures de (a) sections d'un fichier exécutable mappé dans des segments séparés dans la mémoire système ; et de (b) bibliothèques segmentées et permissions correspondantes dans la mémoire système ;
vérifier l'authenticité de l'empreinte digitale (104) sur la base d'une clé cryptographique (201) qui identifie le module de sécurité (102) ;
vérifier l'intégrité du journal de mesures (101) sur la base de l'empreinte digitale vérifiée (202), si l'empreinte digitale (104) est authentique ;
vérifier une fiabilité de chaque mesure dans le journal de mesures (101) sur la base d'une comparaison de la mesure avec une valeur de référence (204a, 204b), si le journal de mesures (101) présente une intégrité, et
déterminer qu'un état de système n'est pas altéré, si on vérifie chaque mesure comme étant fiable.

8. Dispositif (200) selon la revendication 7, dans lequel le dispositif (200) est conçu pour :
charger un fichier de système de code d'objet sécurisé, extraire du fichier de système de code d'objet au moins une partie liée à un contenu de zone de mémoire, et stimuler son processus de chargement, afin de générer une valeur de référence (204a) pour une mesure, et
juger la mesure fiable, si la valeur de référence générée (204a) est égale à la mesure.

9. Dispositif (200) selon la revendication 7 ou 8, dans lequel le dispositif (200) est conçu pour pré-calculer et stocker une valeur de référence (204b) pour chaque mesure, et
juger une mesure fiable, si la valeur de référence pré-calculée et stockée (204b) est égale à la mesure.

10. Dispositif (200) selon l'une des revendications 7 à 9, dans lequel le dispositif (200) est conçu pour :
générer une empreinte numérique de hachage du journal de mesures (101) dans le rapport d'état de système (103), et
comparer l'empreinte numérique de hachage générée avec l'empreinte numérique vérifiée (202), afin de déterminer l'intégrité du journal de mesures (101).

11. Système de dispositif permettant de mesurer et de vérifier des états de système, le système de dispositif comprenant un dispositif (100) selon l'une des revendications 1 à 6 et un dispositif (200) selon l'une des revendications 7 à 10.

12. Procédé (600) de mesure d'états de système, dans lequel le procédé comprend les étapes suivantes :
le mappage de sections d'un fichier exécutable qui est exécuté comme un processus dans des segments séparés dans une mémoire système ;
la segmentation de chaque bibliothèque utilisée par le processus et le chargement des bibliothèques segmentées et des permissions correspondantes dans la mémoire système ;
l'obtention (601) d'une pluralité de mesures pour le processus de toutes les zones d'une mémoire système (110) pendant le temps d'exécution du système et des segments mappés ;
la conservation (602) de chaque mesure individuellement dans un journal de mesures (101) ;
la génération et l'ancrage (603) d'une empreinte digitale du journal de mesures (101) dans un module de sécurité (102), et
la génération et l'envoi (604) d'un rapport d'état de système (103) comprenant l'empreinte digitale ancrée (104) et le journal de mesures (101).

13. Procédé (700) de vérification d'états de système, dans lequel le procédé comprend les étapes suivantes :
la réception (701) d'un rapport d'état de système (103) comprenant un journal de mesures (101), qui contient une pluralité de mesures de toutes les zones d'une mémoire système (110), et une empreinte digitale (104) du journal de mesures (101) générée par un module de sécurité (102), la pluralité de mesures comprenant des mesures de (a) sections d'un fichier exécutable mappé dans des segments séparés dans la mémoire système ; et de (b) bibliothèques segmentées et permissions correspondantes dans la mémoire système ;
la vérification (702) de l'authenticité de l'empreinte digitale (104) sur la base d'une clé cryptographique (201) qui identifie le module de sécurité (102) ;
la vérification (703) de l'intégrité du journal de mesures (101) sur la base de l'empreinte digitale vérifiée (202), si l'empreinte digitale (104) est authentique ;
la vérification (704) d'une fiabilité de chaque mesure dans le journal de mesures (101) sur la base d'une comparaison de la mesure avec une valeur de référence (204a), si le journal de mesures (101) présente une intégrité, et
la détermination (705) qu'un état de système n'est pas altéré, si chaque mesure est fiable.

14. Produit de programme informatique permettant la mise en œuvre, lorsqu'il est exécuté sur un dispositif informatique, d'un procédé (600) selon la revendication 12 et/ou d'un procédé (700) selon la revendication 13.
